# EUROPÄISCHE PATENTSCHRIFT

(11) **EP 3 189 257 B1**
(45) Veröffentlichungstag und Bekanntmachung des Hinweises auf die Patenterteilung: **25.07.2018**
(21) Anmeldenummer: 15734574.5
(22) Anmeldetag: 01.07.2015
(51) Int. Cl.: F16K 31/385, F16K 27/02

(54) **ABSPERRVENTIL SOWIE VERWENDUNG EINES SOLCHEN ABSPERRVENTILS**
SHUT-OFF VALVE AND USE OF SUCH A SHUT-OFF VALVE
SOUPAPE D'ARRÊT ET UTILISATION D'UNE TELLE SOUPAPE D'ARRÊT

(30) Priorität: 04.09.2014 DE 202014007070 U
(43) Veröffentlichungstag der Anmeldung: 12.07.2017
(73) Patentinhaber: Neoperl GmbH, 79379 Müllheim (DE)
(72) Erfinder: HAUTH, Matthias, 79674 Todtnau / Muggenbrunn (DE)
(74) Vertreter: Börjes-Pestalozza, Henrich
(86) Internationale Anmeldenummer: PCT/EP2015/001330
(87) Internationale Veröffentlichungsnummer: WO 2016/034257

(56) Entgegenhaltungen:
- EP-A1- 2 687 763
- WO-A1-00/61973
- WO-A1-2009/089835
- DE-U1-202004 006 163
- DE-U1-202013 002 280
- US-A1- 2013 032 740
- US-A1- 2013 200 282

## Beschreibung

Die Erfindung betrifft ein Absperrventil mit einem in eine Fluidleitung einsetzbaren Ventilgehäuse, einer im Ventilgehäuse vorgesehenen Durchflussöffnung, die einen Ventilsitz umgrenzt, der in einer Schließstellung des Absperrventils von einem Ventilverschluss verschlossen ist, und einem im Ventilgehäuse in Gehäuse-Längsrichtung verschieblich geführten Betätigungsschieber, der mit einer Betätigungsmechanik in Antriebsverbindung steht, welche eine an einem Betätigungsarm ausgeübte Bewegung in eine Linearbewegung am Betätigungsschieber umsetzt, wobei das Ventilgehäuse zumindest zwei miteinander verbindbare Gehäuseteile hat, wobei die den Ventilsitz umgrenzende Durchflussöffnung, der Ventilverschluss sowie der Betätigungsschieber im ersten Gehäuseteil vorgesehen sind, wobei die Betätigungsmechanik mit dem Betätigungsarm im zweiten Gehäuseteil angeordnet ist, wobei die Betätigungsmechanik und der Betätigungsschieber magnetisch gekoppelt miteinander in Antriebsverbindung stehen, wobei der Betätigungsschieber in einem Führungszapfen verschieblich geführt ist, der über eine Trennwand vorsteht, wobei die außenumfangsseitig an dem Gehäuseinnenumfang des ersten Gehäuseteils gehaltene Trennwand und der mit ihr verbundene Führungszapfen den den Ventilverschluss, den Ventilsitz und den Betätigungsschieber aufnehmenden Bereich des ersten Gehäuseteils flüssigkeitsdicht vom zweiten Gehäuseteil trennt, wobei am Führungszapfen ein Magnetträger verschieblich geführt ist, der wenigstens einen Permanentmagneten trägt, und wobei der Magnetträger mit einem Kupplungsstück verbindbar ist, welches im zweiten Gehäuseteil verschieblich geführt ist.

Die Erfindung befasst sich auch mit der Verwendung eines solchen Absperrventils.

Absperrventile werden in den verschiedensten Ausführungen angeboten. Solche. Absperrventile dienen u.a. dazu, eine Fluidleitung zu verschließen und den Durchfluss weiteren Fluids durch diese Fluidleitung in Schließposition des Absperrventils zu verhindern. Die vorbekannten Absperrventile weisen regelmäßig eine im Ventilgehäuse vorgesehene Durchflussöffnung auf, die einen Ventilsitz umgrenzt, der in der Schließstellung des Absperrventils von einem Ventilverschluss verschlossen ist. Der Ventilverschluss wirkt mit einem im Ventilgehäuse in Gehäuse-Längsrichtung verschieblich geführten Betätigungsschieber zusammen, der mit einer Betätigungsmechanik in Antriebsverbindung steht, welche eine an einem Betätigungsarm ausgeübte Dreh-, Linear- oder Schwenkbewegung in eine Linearbewegung am Betätigungsschieber umsetzt. Da die Betätigungsarme solcher Absperrventile je nach Anwendungsfall der Absperrventile auf verschiedene Weise zu betätigen sind, sind entsprechend viele verschiedene Ausführungen eines solchen Absperrventiles herzustellen und zu bevorraten.

In der US 2013/0200282 A1 ist ein Sprinklerventil beschrieben, das einen Ventilkörper aufweist, der als Träger der funktionalen Komponenten des Ventils fungiert. Darüber hinaus werden die einzelnen funktionalen Komponenten des Ventils gegenüber der Umgebung mittels eines Ventildeckels und einer Ventilhülle abgeschirmt. Das Ventil ist dazu eingerichtet, dass es abhängig von einer vordefinierten Umgebungstemperatur mittels Magnetkraft zwischen einer Verschluss- und einer Offenstellung verstellbar ist.

In der DE 20 2013 002 280 U1 ist ein in einer Handbrause-Halteeinrichtung angeordnetes Sperrventil beschrieben. Das Sperrventilgehäuse ist zweiteilig ausgebildet, wobei nur in einem ersten Gehäuseteil eine Anordnung von Ventilkomponenten möglich ist und das zweite Teil lediglich als eine Art Verschlussteil ausgestaltet ist.

In der WO00/61973 ist ein Einschraubventil mit einem im Wesentlichen rohrförmigen Einschraubteil, einem an dem Einschraubteil angrenzenden Flanschteil und einer in dem Flanschteil eingeschraubten Betätigungseinrichtung beschrieben. Das Einschraubteil bildet dabei einen Sitz für einen von einer Ventilspindel gesteuerten Ventilkegel.

In der US 2013/0032740 A1 ist ein elektromagnetisches wasserführendes Ventil beschrieben, wobei das Ventil zwischen -einer Offen- und Verschlussstellung durch Ein- und Ausschalten eines Elektromagnets gesteuert wird.

In der EP 2 687 763 A1 ist ein Ventilsystem mit einem Hauptkörper, der ein Ventilelement aufweist und den Durchfluss eines Fluids zwischen einer Vielzahl an Öffnungen kontrolliert, beschrieben. Ferner umfasst das Ventilsystem eine Befehlseinheit, mittels welcher ein Magnetfeld erzeugbar ist, durch welches ein Verstellelement zwischen einer Offen- und einer Verschlussstellung verstellbar ist.

In der DE 20 2004 006 163 U1 ist eine Armatur für eine Dusche oder dergleichen zum Sperren und Freigeben des Wasserstroms zu mehreren Wasserauslässen in der Dusche beschrieben, wobei die Armatur mehrere unabhängig voneinander betätigbare Magnetventile umfasst. Durch Betätigung eines Druckknopfes wird ein Permanentmagnet längs eines Führungsrohres herabgesetzt und mittels der Magnetkraft ein Magnetanker zwischen einer Offen- und Verschlussstellung verstellbar geführt.

In der WO 2009/089835 A1 ist ein Schaltventil beschrieben, das ein Ventilgehäuse mit einem Ventilsitz, einen Einlass und einen Auslass aufweist, wobei mindestens ein Ventilelement in einem Deckel des Ventilgehäuse angeordnet ist und auf einer dem Ventilsitz zugewandten Seite des Ventilelementes eine Stützplatte angeordnet ist.

Es besteht daher die Aufgabe, ein Absperrventil der eingangs erwähnten Art zu schaffen, das eine am Betätigungsarm ausgeübte Bewegung mit geringem Aufwand in eine Linearbewegung am Betätigungsschieber umsetzt, wobei sich das erfindungsgemäße Absperrventil auch durch einen geringen Montageaufwand auszeichnen soll.

Die erfindungsgemäße Lösung dieser Aufgabe besteht bei dem Absperrventil der eingangs erwähnten Art darin, dass dass die Betätigungsmechanik eine an dem Betätigungsarm ausgeübte Schwenkbewegung in eine Linearbewegung am Betätigungsschieber umsetzt und das Kupplungsstück und der Magnetträger beim Zusammenschieben des ersten und des zweiten Gehäuseteiles miteinander verrasten.

Das erfindungsgemäße Absperrventil weist ein Ventilgehäuse auf, das in eine Fluidleitung einsetzbar ist. Im Ventilgehäuse ist eine Durchflussöffnung vorgesehen, die einen Ventilsitz umgrenzt, der in einer Schließstellung des Absperrventiles von einem Ventilverschluss verschlossen ist. Der Ventilverschluss wirkt mit einem Betätigungsschieber zusammen, der mit einer Betätigungsmechanik in Antriebsverbindung steht.

Die Betätigungsmechanik vermag eine an einem Betätigungsarm ausgeübte Schwenkbewegung in eine Linearbewegung am Betätigungsschieber umzusetzen. Um das erfindungsgemäße Absperrventil in einer modularen Bauweise herstellen zu können, weist das Ventilgehäuse des erfindungsgemäßen Absperrventiles zumindest zwei miteinander verbindbare Gehäuseteile auf, von denen ein erstes Gehäuseteil die den Ventilsitz umgrenzende Durchflussöffnung, den Ventilverschluss sowie den Betätigungsschieber in sich aufnimmt, während demgegenüber in einem zweiten Gehäuseteil die Betätigungsmechanik mit dem Betätigungsarm vorgesehen sind. Dabei stehen die im zweiten Gehäuseteil befindliche Betätigungsmechanik einerseits und der im ersten Gehäuseteil verschieblich geführte Betätigungsschieber andererseits magnetisch gekoppelt miteinander in Antriebsverbindung. Der Betätigungsschieber ist in einem Führungszapfen verschieblich geführt, der über eine Trennwand vorsteht. Diese außenumfangsseitig an dem Gehäuseinnenumfang des ersten Gehäuseteils gehaltene Trennwand und der mit ihr verbundene Führungszapfen trennt den den Ventilverschluss, den Ventilsitz und den Betätigungsschieber aufnehmenden Bereich des ersten Gehäuseteils flüssigkeitsdicht vom zweiten Gehäuseteil. Am Führungszapfen ist ein Magnetträger verschieblich geführt, der wenigstens einen Permanentmagneten trägt. Der Magnetträger ist mit einem Kupplungsstück verbindbar, welches im zweiten Gehäuseteil verschieblich geführt ist. Die Betätigungsmechanik setzt eine am Betätigungsarm ausgeübte Schwenkbewegung in eine Linearbewegung am Betätigungsschieber um. Um den Betätigungsschieber und die Betätigungsmechanik auf einfache Weise magnetisch miteinander in Antriebsverbindung bringen zu können, ist vorgesehen, dass im ersten Gehäuseteil ein Magnetträger verschieblich geführt ist, der wenigstens einen Permanentmagneten trägt, und dass der Magnetträger im ersten Gehäuseteil mit einem Kupplungsstück verbindbar ist, welches im zweiten Gehäuseteil verschieblich geführt ist. Da der Betätigungsschieber in einem Führungszapfen verschieblich geführt ist, der über eine Trennwand vorsteht, und da die außenumfangsseitig an dem Gehäuseinnenumfang des ersten Gehäuseteils gehaltene Trennwand und der mit ihr verbundene Führungszapfen das Gehäuseinnere der Gehäuseteile flüssigkeitsdicht voneinander trennt, lässt sich die Verbindung der beiden Gehäuseteile auf einfache Weise bewerkstelligen, ohne dass diese Gehäuseteile noch zusätzlich gegeneinander abgedichtet werden müssten. Um eine dauerhafte Verbindung zwischen dem im zweiten Gehäuseteil vorgesehenen Kupplungsstück und dem im ersten Gehäuseteil verschieblich geführten Magnetträger bewerkstelligen zu können, ist erfindungsgemäß vorgesehen, dass das Kupplungsstück mit dem Magnetträger beim Zusammenschieben des ersten und des zweiten Gehäuseteiles miteinander verrastbar ist.

Solche Absperrventile werden häufig benötigt, um ein unkontrolliertes Austreten des in der Fluidleitung geführten Fluids während der Abwesenheit eines Anwenders zu verhindern. Besonders vorteilhaft ist es daher, wenn das Absperrventil in seiner Schließstellung verharrt, bis ein neuer bewusster Betätigungsimpuls am Betätigungsarm ausgeübt wird, der den Verschlusskörper im Absperrventil von seiner Schließstellung in die Offenposition des Absperrventiles bewegt. Eine bevorzugte Weiterbildung gemäß der Erfindung sieht daher vor, dass im Ventilverschluss des Absperrventiles ein erster Flüssigkeitskanal vorgesehen ist, der eine der Durchflussöffnung zugewandte erste Ventilseite mit einer auf der der Durchflussöffnung abgewandten zweiten Ventilseite angeordneten Kammer verbindet, dass der Betätigungsschieber in einer, in die dem Ventilverschluss abgewandte Richtung vorgeschobenen Schiebeposition des Betätigungsschiebers wenigstens eine Auslassöffnung im Ventilverschluss freigibt, welche Auslassöffnung die Kammer mit dem Flüssigkeitsauslass verbindet, und dass der vom ventilsitz in Schließstellung des Absperrventiles umgrenzte Teilbereich der ersten Ventilseite im Vergleich zu der der Kammer zugewandten zweiten Ventilseite kleiner ist.

Um die Gehäuseteile des erfindungsgemäßen Absperrventiles miteinander verbinden und die darin vorgesehenen Funktionselemente miteinander koppeln zu können, ist es zweckmäßig, wenn das erste und das zweite Gehäuseteil in ihren einander zugewandten Teilbereichen ineinander einsetzbar und miteinander vorzugsweise lösbar verbindbar sind.

Um die Gehäuseteile des erfindungsgemäßen Absperrventiles auf einfache Weise dauerhaft miteinander verbinden zu können, kann es zweckmäßig sein, wenn das erste und das zweite Gehäuseteil miteinander verrastbar sind. Die im zweiten Gehäuseteil vorgesehene Betätigungsmechanik kann eine Schwenkbewegung in eine Linearbewegung des den Ventilverschluss betätigenden Betätigungsschiebers umsetzen. Um beispielsweise eine Schwenkbewegung umzusetzen, kann es zweckmäßig sein, wenn der Betätigungsarm als ein im zweiten Gehäuseteil verschwenkbar gelagerter Schwenkarm ausgebildet ist, der mit dem Betätigungsschieber im ersten Gehäuseteil beim Verbinden der Gehäuseteile in Antriebsverbindung bringbar ist.

Dabei sieht eine bevorzugte Ausführungsform gemäß der Erfindung vor, dass der als Schwenkarm ausgebildete Betätigungsarm an seinem ersten Armende mit einem Handbrause-Halter vorzugsweise lösbar verbindbar ist und an seinem zweiten Armende mit dem Betätigungsschieber in Antriebsverbindung steht.

Um die Antriebsverbindung zwischen dem Betätigungsschieber und der Betätigungsmechanik magnetisch miteinander koppeln zu können, sieht eine bevorzugte; Ausführungsform gemäß der Erfindung vor, dass der wenigstens eine am Magnetträger gehaltene Permanentmagnet mit einem, zumindest in einem Teilbereich ferromagnetischen Betätigungsschieber zusammenwirkt. Auch am Betätigungsschieber kann dazu beispielsweise zumindest ein Permanentmagnet vorgesehen sein.

Die Magnetkraft des am Magnetträger vorgesehenen Permanentmagneten lässt sich auch durch die Umfangswandung des Führungszapfens hindurch besonders gut allseits auf den zumindest in einem Teilbereich ferromagnetischen Betätigungsschieber übertragen, wenn der wenigstens eine am Magnetträger gehaltene Permanentmagnet ringförmig ausgebildet ist und wenn der Führungszapfen die Ringöffnung des wenigstens einen Permanentmagneten durchsetzt.

Damit der am Magnetträger vorgesehene Permanentmagnet seine Magnetkraft unabhängig von der Bewegungsrichtung des Magnetträgers gut auf den zumindest in einem Teilbereich ferromagnetischen Betätigungsschieber übertragen kann, ist es vorteilhaft, wenn der ringförmig ausgebildete Permanentmagnet bis zu einem Einsetzanschlag in den Magnetträger einsetzbar ist, und wenn im Magnetträger zumindest eine Rastnocke vorsteht, die den auf dem Einsetzanschlag aufliegenden Permanentmagneten hintergreift.

Eine Schwenkbewegung des Schwenkarmes sowohl in die eine als auch in die andere Schwenkrichtung lässt sich auf einfache Weise in eine Linearbewegung des Betätigungsschiebers umsetzen; wenn eine Umsetzungsmechanik oder ein Umsetzungsgetriebe vorgesehen ist, welches eine Schwenkbewegung des als Schwenkarm ausgebildeten Betätigungsarmes in eine Schiebebewegung des Kupplungsstückes umsetzt.

Dabei sieht eine bevorzugte Weiterbildung gemäß der Erfindung vor, die sich auch durch eine hohe Funktionssicherheit auszeichnet, dass am Schwenkarm zumindest eine kreisbogenförmig gekrümmte Zahnung vorgesehen ist, die mit einer zugeordneten Gegenzahnung am Kupplungsstück kämmt.

Damit der Schwenkarm auch die zum Öffnen des Sperrventiles erforderliche Rückstellkraft auf den Betätigungsschieber und letztendlich auf das Absperrventil übertragen kann, ist es vorteilhaft, wenn der Schwenkarm von der Offenstellung des Absperrventiles gegen eine Rückstellkraft in dessen Schließstellung verschwenkbar ist.

Dabei sieht eine besonders einfache Ausführungsform gemäß der Erfindung vor, dass die Rückstellkraft als zumindest eine Rückstellfeder ausgebildet sein kann.

Die als Rückstellkraft dienende Rückstellfeder kann beispielsweise eine Schenkelfeder sein, die auf den Schwenkarm einwirkt. Vorteilhaft ist es jedoch, wenn die Rückstellfeder als federnde und den Schwenkarm beaufschlagende Rückstellzunge ausgebildet ist.

Die von den verschiedenen Armaturenherstellern angebotenen Handbrausen können ein unterschiedliches Eigengewicht aufweisen. Damit das erfindungsgemäße Absperrventil auch mit den verschiedensten Armaturen vorteilhaft einsetzbar ist, ist es zweckmäßig, wenn die Rückstellkraft einstellbar ist und wenn die Rückstellkraft damit an die unterschiedlichen Eigengewichte der verschiedenen Handbrausen eingestellt werden kann.

Dabei sieht eine bevorzugte Ausführungsform gemäß der Erfindung vor, dass der Anpressdruck der Rückstellzunge an den Schwenkarm mittels einer Stellschraube veränderbar und festlegbar ist.

Eine bevorzugte Verwendung des erfindungsgemäßen Absperrventiles sieht vor, dass das Absperrventil ein flüssigkeitsführendes Absperrventil ist.

Man kennt bereits Handbrause-Halteeinrichtungen, die als Ersatz für ein Bidet im Bereich einer Toilette angeordnet und verwendet werden. Die vorbekannten Handbrause-Halteeinrichtungen dienen zur Bereitstellung einer Handbrause, die über eine flexible Schlauchleitung mit dem Wasserversorgungsnetz verbunden ist. In die Handbrause ist ein manuell betätigbares Brause- oder Entnahmeventil integriert, das zur Wasserentnahme öffenbar und anschließend wieder schließbar ist. Der Armaturenkorpus, der meist neben einer Toilettenschüssel an der Wand befestigt ist, weist einen gabelförmigen Handbrausehalter auf, durch dessen Gabelöffnung die flexible Schlauchleitung derart eingefädelt werden kann, dass anschließend die Handbrause in einer Bereitschaftsstellung im Handbrausehalter eingesetzt und bis zum nächsten Einsatz abgelegt werden kann.

Bei solchen Handbrausen, die über eine flexible Schlauchleitung mit dem Wasserzulauf verbunden sind, besteht jedoch die Gefahr, dass die Handbrause in Schmutzwasser eingetaucht wird und dass anschließend bei entsprechenden Druckverhältnissen solches Schmutzwasser über die Handbrause und die flexible Schlauchleitung in das Trinkwasserversorgungsnetz gelangt. Um dieser Gefahr zu begegnen, ist es bereits bekannt, solchen Handbrausen zuströmseitig eine Rücklaufsperre vorzuschalten, die ein Ansaugen von Schmutzwasser über die Handbrause entgegen der üblichen Durchströmrichtung verhindert und die beispielsweise als Rückschlagventil ausgestaltet sein kann. Bei den vorbekannten Handbrausen-Halteeinrichtungen besteht jedoch die Gefahr, dass es zu Undichtigkeiten insbesondere im Bereich der bruchgefährdeten flexiblen Schlauchleitung kommen und das zuströmende Wasser anschließend ungehindert ausströmen kann, insbesondere wenn ein in die Auslaufarmatur integriertes Absperrventil nicht geschlossen wird. Eine bevorzugte Verwendung des erfindungsgemäßen Absperrventiles sieht deshalb vor, dass das erfindungsgemäße Absperrventil mit seinem Ventilgehäuse mit einer als Handbrause-Halteeinrichtung ausgebildeten Sanitärarmatur einsetzbar und dort einem zu einer Handbrause führenden Flüssigkeitauslass in Strömungsrichtung vorgeschaltet ist. Ein solches Absperrventil kann mit den verschiedensten Handbrause-Halteeinrichtungen vorteilhaft eingesetzt werden, bei denen das Öffnen und Schließen des Absperrventiles auf die unterschiedlichste Weise erfolgt, wobei der Aufwand zum Anpassen des Absperrventiles an die verschiedenen Einbaubedingungen und Handbrause-Halteeinrichtungen gering gehalten werden kann.

Weiterbildungen gemäß der Erfindung ergeben sich aus der nachfolgenden Beschreibung eines bevorzugten Ausführungsbeispieles in Verbindung mit den Ansprüchen sowie der Zeichnung. Nachstehend wird die Erfindung anhand eines bevorzugten Ausführungsbeispieles noch näher beschrieben.

Es zeigt:
- Figur 1: ein Absperrventil, das hier für eine als Handbrause-Halteeinrichtung ausgebildete Sanitärarmatur bestimmt ist und das ein als Einsetzpatrone: ausgestaltetes Ventilgehäuse hat, wobei das Absperrventil in einem Längsschnitt durch das aus einem ersten Gehäuseteil und einem zweiten Gehäuseteil bestehende Ventilgehäuse gezeigt ist,
- Figur 2: die noch voneinander getrennten Gehäuseteile des in Figur 1 gezeigten Absperrventiles unmittelbar vor dem Zusammenfügen der hier ebenfalls längsgeschnitten dargestellten Gehäuseteile,
- Figur 3: die noch voneinander getrennten Gehäuseteile des Absperrventiles aus den Figuren 1 und 2 in einem perspektivischen Längsschnitt,
- Figur 4: die bereits ineinandergeschobenen, aber noch nicht miteinander verrasteten Gehäuseteile des Absperrventiles aus den Figuren 1 bis 3 in einem Längsschnitt,
- Figur 5: die Gehäuseteile des Absperrventiles aus den Figuren 1 bis 4 in einem Detail-Längsschnitt, in dem in Figur 4 gekennzeichneten Teilbereich der Trennebene zwischen den Gehäuseteilen,
- Figur 6: die endgültig miteinander verrasteten Gehäuseteile des Absperrventiles aus den Figuren 1 bis 5 in einem Längsschnitt,
- Figur 7: die Gehäuseteile des Absperrventiles aus Figur 1 bis 6 in einem Detail-Längsschnitt in dem in Figur 6 gekennzeichneten Teilbereich der Trennebene zwischen den Gehäuseteilen,
- Figur 8: das Absperrventil aus den Figuren 1 bis 7 in einer auseinandergezogenen Einzelteildarstellung,
- Figur 9: das Absperrventil aus den Figuren 1 bis 8 in einer auseinandergezogenen Einzelteildarstellung seiner hier teils längsgeschnitten gezeigten Bestandteile, und
- Figur 10: das Absperrventil aus den Figuren 1 bis 9 in einer teilweise angeschnittenen Perspektivdarstellung.

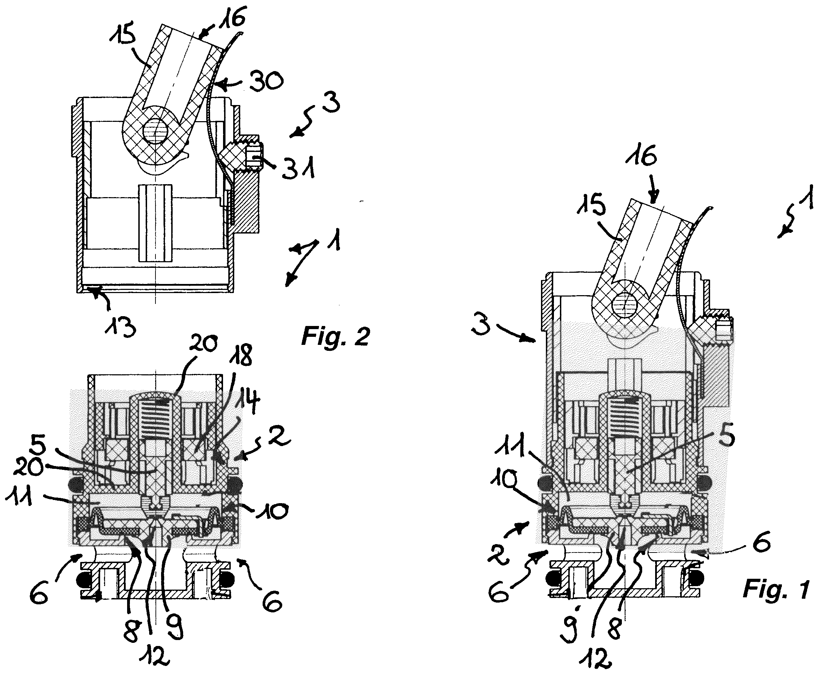

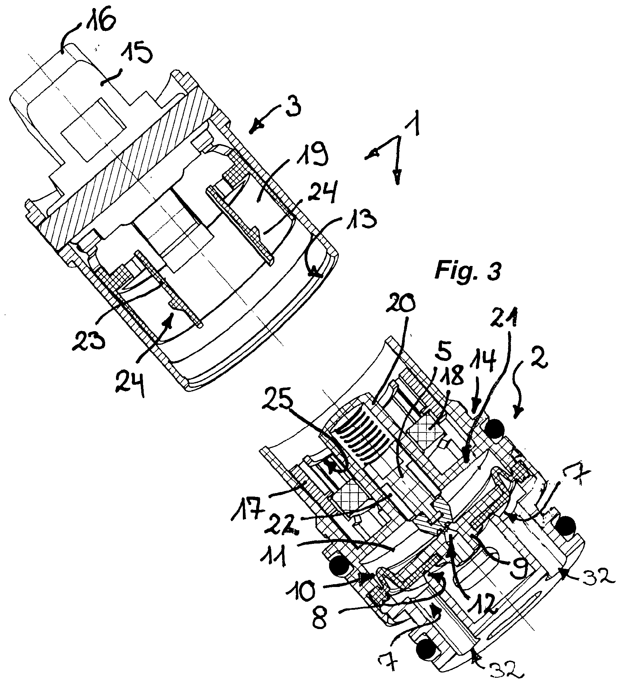

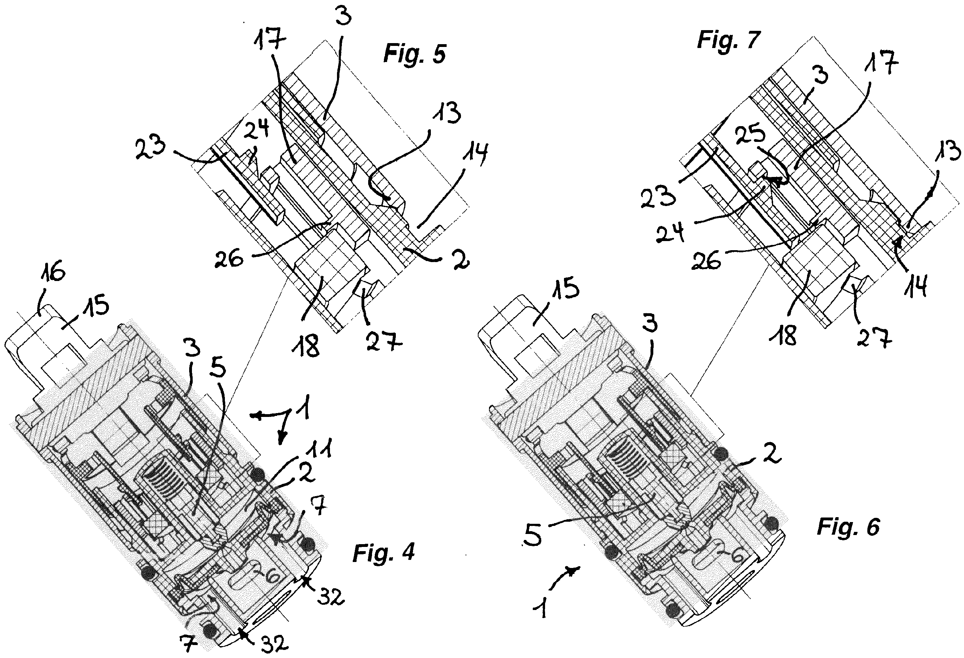

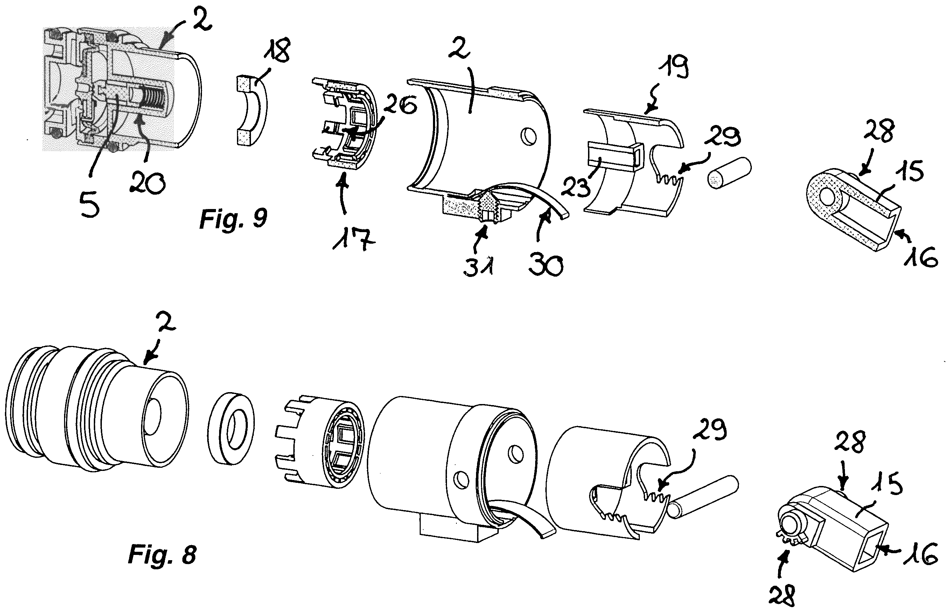

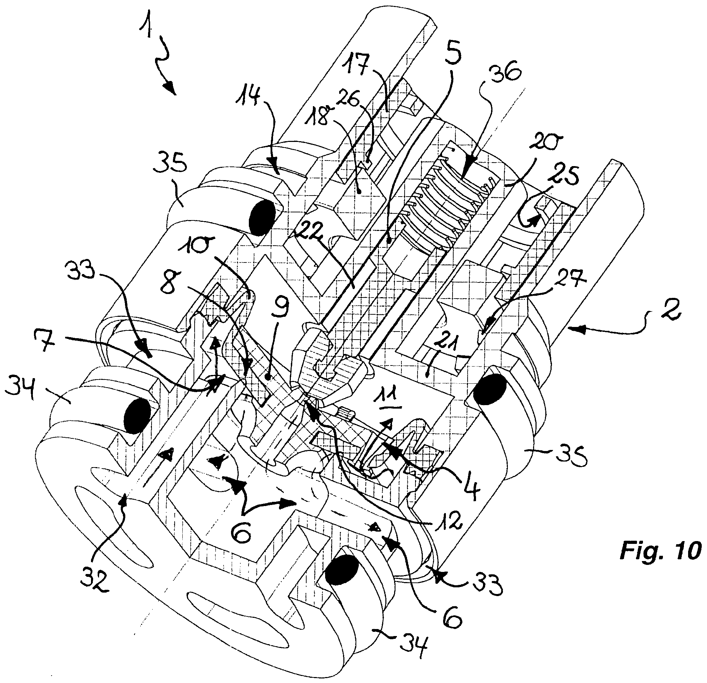

In den Figuren 1 bis 10 ist ein Absperrventil 1 dargestellt. Das Absperrventil 1 hat ein in eine Fluidleitung einsetzbares Ventilgehäuse. Das Absperrventil 1 ist für eine als Handbrause-Halteeinrichtung ausgestaltete und hier nicht weiter gezeigte Sanitärarmatur bestimmt. Das Absperrventil 1 ist dazu mit seinem als Einsetzpatrone ausgebildeten Ventilgehäuse in eine durch die Handbrause-Halteeinrichtung geführte Wasserleitung einsetzbar. Das Ventilgehäuse des Absperrventiles 1 hat zwei Gehäuseteile 2, 3, die miteinander verbindbar sind. Das Absperrventil 1 ist einem zu einer Handbrause führenden Flüssigkeitsauslass in Strömungsrichtung vorgeschaltet. Das Absperrventil 1 hat eine Durchflussöffnung 7, die einen Ventilsitz 8 umgrenzt, der in der hier gezeigten Schließstellung des Absperrventiles 1 von einem Ventilverschluss 9 verschlossen ist. Dieser Ventilverschluss 9 ist hier über eine elastische, membranartige Scheibe 10 am Innenumfang des ersten Gehäuseteiles 2 beweglich gehalten. Im Ventilverschluss 9 ist ein Flüssigkeitskanal 4 vorgesehen, der die der Durchflussöffnung 7 zugewandte ersten Ventilseite mit einer auf der der Durchflussöffnung 7 abgewandten zweiten Ventilseite angeordneten Kammer 11 verbindet. Mit dem Ventilverschluss 9 wirkt ein Betätigungsschieber 5 zusammen, der im Ventilgehäuse in Gehäuse-Längsrichtung längsverschieblich geführt ist.

Das Ventilgehäuse des Absperrventiles 1 hat zwei Gehäuseteile 2, 3, die miteinander verbindbar sind. Dabei ist in dem ersten Gehäuseteil 2 die den Ventilsitz 8 umgrenzende Durchflussöffnung 7, der Ventilverschluss 9 sowie der Betätigungsschieber 5 angeordnet, während im zweiten Gehäuseteil 3 eine Betätigungsmechanik vorgesehen ist, welche eine an einem Betätigungsarm ausgeübte Dreh-, Linear- oder - wie hier - Schwenkbewegung in eine Linearbewegung am Betätigungsschieber 5 umsetzt. Die Betätigungsmechanik im zweiten Gehäuseteil 3 und der Betätigungsschieber 5 im ersten Gehäuseteil 2 stehen hier magnetisch gekoppelt miteinander in Antriebsverbindung.

Der Betätigungsschieber 5 gibt in einer, gegen eine Rückstellfeder 36 im Führungszapfen 20 in die dem Ventilverschluss 9 abgewandte Richtung vorgeschobenen Schiebeposition des Betätigungsschiebers 5 eine Auslassöffnung 12 frei, welche die Kammer 11 mit dem Ventilauslass 6 des Absperrventiles verbindet. Dabei ist der vom Ventilsitz 8 in Schließstellung des Absperrventiles 1 umgrenzte Teilbereich der ersten Ventilseite im Vergleich zu der der Kammer 11 zugewandten zweiten Ventilseite kleiner, derart, dass das Absperrventil 1 allein durch die Druckverhältnisse auf den beiden Seiten des Ventilverschlusses 9 in seiner Schließstellung verharrt, solange der Betätigungsschieber 5 die Auslassöffnung 12 verschließt.

Aus einem Vergleich beispielsweise der Figuren 1 und 2 wird deutlich, dass das erste und das zweite Gehäuseteil 2, 3 in ihren einander zugewandten Teilbereichen ineinander einsetzbar und miteinander verbindbar sind. Dabei ist am Innenumfang des zweiten Gehäuseteiles 3 ein vorzugsweise umlaufendes Rastelement 13, beispielsweise ein Rastvorsprung, vorgesehen, der mit einem am Außenumfang des ersten Gehäuseteiles 2 angeordneten, vorzugsweise ebenfalls umlaufenden Gegenrastmittel 14, insbesondere einer Rastausnehmung, zusammenwirkt.

Die im zweiten Gehäuseteil 3 vorgesehene Betätigungsmechanik setzt eine Längs-, Dreh- oder - wie hier - eine Schwenkbewegung an dem hier als Schwenkarm 15 ausgebildeten Betätigungsarm in eine lineare Bewegung des mit der Betätigungsmechanik in Antriebsverbindung stehenden Betätigungsschiebers 5 um. Bei der hier dargestellten Betätigungsmechanik wird eine Schwenkbewegung des eingangsseitig der Betätigungsmechanik vorgesehenen Betätigungsarmes in eine lineare Bewegung des auf der Ausgangsseite der Betätigungsmechanik vorgesehenen Betätigungsschiebers 5 umgesetzt. Dazu ist im zweiten Gehäuseteil 3 der als Betätigungsarm dienende Schwenkarm 15 verschwenkbar gelagert, an dessen freiem, über das Ventilgehäuse vorstehenden Armende 16 ein hier nicht gezeigter Handbrause-Halter zur Aufnahme einer Handbrause befestigbar ist. Beim Zusammenfügen und Verbinden der Gehäuseteile 2, 3 wird das zweite Armende des Schwenkarmes 15 mit dem Betätigungsschieber 5 in Antriebsverbindung gebracht.

Der Betätigungsschieber 5 einerseits und der als Betätigungsarm dienende Schwenkarm 15 andererseits sind hier magnetisch miteinander gekoppelt. Dazu ist im ersten Gehäuseteil ein Magnetträger 17 verschieblich geführt, der einen ringförmigen Permanentmagneten 18 trägt. Der im ersten Gehäuseteil 2 vorgesehene Magnetträger 17 ist mit einem Kupplungsstück 19 verbindbar, das im zweiten Gehäuseteil 3 verschieblich geführt ist. Der Betätigungsschieber 5 ist im ersten Gehäuseteil 2 in einem Führungszapfen 20 verschieblich geführt, der über eine Trennwand 21 vorsteht. Die außenumfangsseitig an dem Gehäuseinnenumfang gehaltene Trennwand 21 und der mit ihr einstückig verbundene Führungszapfen 20 trennt die Kammer 11 flüssigkeitsdicht von der im zweiten Gehäuseteil 3 vorgesehenen Betätigungsmechanik.

Aus den Figuren 1 bis 10 ist erkennbar, dass der am Magnetträger 17 gehaltene Permanentmagnet 18 mit einem Betätigungsschieber 5 zusammenwirkt, der dazu zumindest in dem vom Permanentmagnet 18 umgriffenen Teilbereich ferromagnetisch ausgebildet ist. Der Betätigungsschieber 5 trägt in seinem vom Permanentmagneten 18 umgriffenen ferromagnetischen Teilbereich eine Gleithülse 22, welche die Relativverschieblichkeit von Betätigungsschieber 5 und Permanentmagnet 18 noch zusätzlich begünstigt. Dabei ist der Permanentmagnet 18 ringförmig ausgebildet und der Führungszapfen 20 durchsetzt die Ringöffnung des Permanentmagneten 18. Beim Zusammenschieben der Gehäuseteile 2, 3 wird gleichzeitig auch das Kupplungsstück 19 mit dem Magnetträger 17 verrastet. Am Kupplungsstück 19 sind dazu stirnseitig vorstehende Halterarme 23 vorgesehen, die mit ihren an den Armenden befindlichen Rastnasen 24 einen Ringabsatz 25 am Magnetträger 17 hintergreifen.

Um den Permanentmagneten 18 unverrückbar an dem Magnetträger 17 befestigen zu können, kann der Permanentmagnet 18 bis zu einem Einsetzanschlag 26 in den hier hülsenförmig ausgebildeten Magnetträger 17 eingesetzt werden, wobei in das Hülseninnere des Magnetträgers 17 zumindest eine Rastnocke 27 vorsteht, die den auf den Einsetzanschlag 26 aufliegenden Permanentmagneten 18 hintergreift.

Eine Schwenkbewegung des Schwenkarmes 15, die insbesondere durch Ablegen einer Handbrause in den mit dem Schwenkarm 15 verbundenen Handbrausehalter ausgelöst wird, wird mittels einer Umsetzungsmechanik in eine Schiebebewegung des Kupplungsstückes 19 umgesetzt. Am Schwenkarm 15 sind dazu beidseits kreisbogenförmig gekrümmte Zahnungen 28 vorgesehen, die jeweils mit einer zugeordneten Gegenzahnung 29 am Kupplungsstück 19 kämmen. Der Schwenkarm 15 ist von der Offenstellung des Sperrventiles 4 gegen eine Rückstellkraft in dessen Schließstellung verschwenkbar. Die Rückstellkraft ist als zumindest eine Rückstellfeder 30 ausgebildet. Diese Rückstellfeder 30 wird hier durch eine federnde und den Schwenkarm 15 beaufschlagende Rückstellzunge gebildet. Dabei ist die von der Rückstellzunge 30 ausgeübte Rückstellkraft mittels einer Stellschraube 31 einstellbar, mit der der Anpressdruck der Rückstellzunge 30 an dem Schwenkarm 15 verändert und festgelegt werden kann.

Durch Auswechseln der im zweiten Gehäuseteil 3 vorgesehenen Betätigungsmechanik kann das Absperrventil 1 leicht auch an andere Sanitärarmaturen angepasst werden, bei denen beispielsweise eine auf den Betätigungsarm der Betätigungsmechanik ausgeübte Dreh- oder Linearbewegung in eine Linearbewegung des Betätigungsschiebers 5 umzusetzen ist.

Auf der zuströmseitigen Stirnseite des Absperrventiles 1 ist wenigstens ein Ventileinlass 32 vorgesehen. Das durch die Fluidleitung zuströmende Fluid strömt durch den wenigstens einen Ventileinlass 32 in das Innere des Absperrventiles 1. Das Fluid kann bei geschlossener Durchflussöffnung 7 in der hier gezeigten Schließstellung durch den Flüssigkeitskanal 4 in die Kammer 11 des Absperrventiles 1 einströmen. Da die der Kammer 11 zugewandte Ventilseite im Vergleich zu der der Durchflussöffnung 7 zugewandten Ventilseite größer ist, wird der Ventilverschluss 9 durch den Fluiddruck gegen den Ventilsitz 8 gepresst und der Ventilverschluss 9 verharrt sicher in der Schließposition. Wird der Betätigungsschieber 5 nun in Richtung zur Betätigungsmechanik verschoben und wird dadurch das Absperrventil 1 in seiner Offenposition bewegt, öffnet sich die mit dem Betätigungsschieber 5 zusammenwirkende Auslassöffnung 12 und das Fluid kann von der Kammer 11 über die Auslassöffnung 12 durch den Ventilauslass 6 aus dem Absperrventil 1 ausströmen. Der Ventilauslass 6 mündet in einer umlaufenden Nut 33, die am Gehäuseumfang des Ventilgehäuses vorgesehen ist. Dabei sind am Gehäuseumfang des Ventilgehäuses zwei Ringdichtungen 34, 35 vorgesehen, zwischen denen der Ventilauslass 6 angeordnet ist. Diese Ringdichtungen 34, 35 dichten den Ringspalt zwischen dem Gehäuseaußenumfang des Ventilgehäuses einerseits und dem Innenumfang der Fluidleitung andererseits ab. Die Fluidleitung weist einen abströmseitigen Leitungsabschnitt auf, der zwischen den Ringdichtungen 34, 35 mit dem Ventilauslass 6 des Absperrventiles 1 verbunden ist.

### Bezugszeichenliste

- 1: Absperrventil
- 2: erstes Gehäuseteil
- 3: zweites Gehäuseteil
- 4: Flüssigkeitskanal
- 5: Betätigungsschieber
- 6: Ventilauslass
- 7: Durchflussöffnung
- 8: Ventilsitz
- 9: Ventilverschluss
- 10: Scheibe
- 11: Kammer
- 12: Auslassöffnung
- 13: Rastelement
- 14: Gegenrastmittel
- 15: Schwenkarm
- 16: Armende
- 17: Magnetträger
- 18: Permanentmagnet
- 19: Kupplungsstück
- 20: Führungszapfen
- 21: Trennwand
- 22: Gleithülse
- 23: Haltearme
- 24: Rastnasen
- 25: Ringabsatz
- 26: Einsetzanschlag
- 27: Rastnocke
- 28: Zahnungen
- 29: Gegenzahnung
- 30: Rückstellfeder
- 31: Stellschraube
- 32: Ventileinlass
- 33: Nut
- 34: Ringdichtung
- 35: Ringdichtung
- 36: Rückstellfeder

## Patentansprüche

1. Absperrventil (1) mit einem in eine Fluidleitung einsetzbaren Ventilgehäuse, einer im Ventilgehäuse vorgesehenen Durchflussöffnung (7), die einen Ventilsitz (8) umgrenzt, der in einer Schließstellung des Absperrventils (1) von einem Ventilverschluss (9) verschlossen ist, und einem im Ventilgehäuse.in Gehäuse-Längsrichtung verschieblich geführten Betätigungsschieber (5), der mit einer Betätigungsmechanik in Antriebsverbindung steht, welche eine an einem Betätigungsarm ausgeübte Bewegung in eine Linearbewegung am Betätigungsschieber (5) umsetzt, wobei das Ventilgehäuse zumindest zwei miteinander verbindbare Gehäuseteile (2, 3) hat, wobei die den Ventilsitz (8) umgrenzende Durchflussöffnung (7), der Ventilverschluss (9) sowie der Betätigungsschieber (5) im ersten Gehäuseteil (2) vorgesehen sind, wobei die Betätigungsmechanik mit dem Betätigungsarm (15) im zweiten Gehäuseteil (3) angeordnet ist, wobei die Betätigungsmechanik und der Betätigungsschieber (5) magnetisch gekoppelt miteinander in Antriebsverbindung stehen, wobei der Betätigungsschieber (5) in einem Führungszapfen (20) verschieblich geführt ist, der über eine Trennwand (21) vorsteht, wobei die außenumfangsseitig an dem Gehäuseinnenumfang des ersten Gehäuseteils (2) gehaltene Trennwand (21) und der mit ihr verbundene Führungszapfen (20) den den Ventilverschluss (9), den Ventilsitz (8) und den Betätigungsschieber (5) aufnehmenden Bereich des ersten Gehäuseteils (2) flüssigkeitsdicht vom zweiten Gehäuseteil (3) trennt, wobei am Führungszapfen (20) ein Magnetträger (17) verschieblich geführt ist, der wenigstens einen Permanentmagneten (18) trägt, und wobei der Magnetträger (17) mit einem Kupplungsstück (19) verbindbar ist, welches im zweiten Gehäuseteil verschieblich geführt ist, **dadurch gekennzeichnet, dass** die Betätigungsmechanik eine an dem Betätigungsarm (15) ausgeübte Schwenkbewegung in eine Linearbewegung am Betätigungsschieber (5) umsetzt und das Kupplungsstück (19) und der Magnetträger (17) beim Zusammenschieben des ersten und des zweiten Gehäuseteiles (2, 3) miteinander verrasten.

2. Absperrventil nach Anspruch 1, **dadurch gekennzeichnet, dass** ein erster Flüssigkeitskanal (4) vorgesehen ist, der eine der Durchflussöffnung (7) zugewandte erste Ventilseite mit einer auf der der Durchflussöffnung (7) abgewandten zweiten Ventilseite angeordneten Kammer (11) verbindet, dass der Betätigungsschieber (5) in einer in die dem Ventilverschluss (9) abgewandte Richtung vorgeschobenen Schiebeposition des Betätigungsschiebers (5) wenigstens eine Auslassöffnung (12) im Ventilverschluss (9) freigibt, welche Auslassöffnung (12) die Kammer (11) mit dem ventilauslass (6) verbindet, und dass der vom Ventilsitz (8) in Schließstellung des Absperrventiles (1) umgrenzte Teilbereich der ersten Ventilseite im Vergleich zu der der Kammer (11) zugewandten zweiten Ventilseite kleiner ist.

3. Absperrventil nach Anspruch 1 oder 2, **dadurch gekennzeichnet, dass** das erste und das zweite Gehäuseteil (2, 3) in ihren einander zugewandten Teilbereichen ineinander einsetzbar und miteinander lösbar verbindbar sind.

4. Absperrventil nach Anspruch 3, **dadurch gekennzeichnet, dass** das erste und das zweite Gehäuseteil (2, 3) miteinander verrastbar sind.

5. Absperrventil nach einem der Ansprüche 1 bis 4, **dadurch gekennzeichnet, dass** der Betätigungsarm als ein im zweiten Gehäuseteil verschwenkbar gelagerter Schwenkarm (15) ausgebildet ist, der mit dem Betätigungsschieber (5) im ersten Gehäuseteil (2) beim Verbinden der Gehäuseteile (2, 3) in Antriebsverbindung bringbar ist.

6. Absperrventil nach Anspruch 5, **dadurch gekennzeichnet, dass** der als Schwenkarm (15) ausgebildete Betätigungsarm an seinem ersten Armende (16) mit einem Handbrause-Halter vorzugsweise lösbar verbindbar ist und an seinem zweiten Armende mit dem Betätigungsschieber (5) in Antriebsverbindung steht.

7. Absperrventil nach einem der Ansprüche 1 bis 6, **dadurch gekennzeichnet, dass** der wenigstens eine am Magnetträger (17) gehaltene Permanentmagnet (18) mit einem ferromagnetischen Betätigungsschieber (5) zusammenwirkt.

8. Absperrventil nach einem der Ansprüche 1 bis 7, **dadurch gekennzeichnet, dass** der wenigstens eine am Magnetträger (17) gehaltene Permanentmagnet (18) ringförmig ausgebildet ist und dass der Führungszapfen (20) die Ringöffnung des wenigstens einen Permanentmagneten (18) durchsetzt.

9. Absperrventil nach Anspruch 8, **dadurch gekennzeichnet, dass** der ringförmig ausgebildete Permanentmagnet (18) bis zu einem Einsetzanschlag (26) in den Magnetträger (17) einsetzbar ist, und dass im Magnetträger (17) zumindest eine Rastnocke (27) vorsteht, die den auf dem Einsetzanschlag (26) aufliegenden Permanentmagneten (18) hintergreift.

10. Absperrventil nach einem der Ansprüche 5 bis 9, **dadurch gekennzeichnet, dass** eine Ümsetzungsmechanik oder ein Umsetzungsgetriebe vorgesehen ist, welches eine Schwenkbewegung des als Schwenkarm (15) ausgebildeten Betätigungsarmes in eine Schiebebewegung des Kupplungsstückes (19) umsetzt.

11. Absperrventil nach einem der Ansprüche 5 bis 10, **dadurch gekennzeichnet, dass** am Schwenkarm (15) zumindest eine kreisbogenförmig gekrümmte Zahnung (28) vorgesehen ist, die mit einer zugeordneten Gegenzahnung (29) am Kupplungsstück (19) kämmt.

12. Absperrventil nach einem der Ansprüche 5 bis 11, **dadurch gekennzeichnet, dass** der Schwenkarm (15) von der Offenstellung des Absperrventils (4) gegen eine Rückstellkraft in dessen Schließstellung verschwenkbar ist.

13. Absperrventil nach Anspruch 12, **dadurch gekennzeichnet, dass** die Rückstellkraft als zumindest eine Rückstellfeder ausgebildet ist.

14. Absperrventil nach Anspruch 13, **dadurch gekennzeichnet, dass** die Rückstellfeder als federnde und den Schwenkarm (15) beaufschlagende Rückstellzunge (30) ausgebildet ist.

15. Absperrventil nach einem der Ansprüche 12 bis 14, **dadurch gekennzeichnet, dass** die Rückstellkraft einstellbar ist.

16. Absperrventil nach Anspruch 15, **dadurch gekennzeichnet, dass** der Anpressdruck der Rückstellzunge (30) an den Schwenkarm (15) mittels einer Stellschraube (31) veränderbar und festlegbar ist.

17. Verwendung eines Absperrventils nach einem der Ansprüche 1 bis 16, **dadurch gekennzeichnet, dass** das Absperrventil (1) ein flüssigkeitsführendes Absperrventil ist.

18. Verwendung eines Absperrventils nach einem der Ansprüche 1 bis 16, **dadurch gekennzeichnet, dass** das Absperrventil mit seinem Ventilgehäuse in einer als Handbrause-Halteeinrichtung ausgebildeten Sanitärarmatur einsetzbar und dort einem zu einer Handbrause führenden Flüssigkeitsauslass (6) in Strömungsrichtung vorgeschaltet ist.

## Claims

1. Shut-off valve (1) comprising a valve housing which can be inserted into a fluid line, a through-flow opening (7) which is provided in the valve housing and defines a valve seat (8) which is closed by a valve closure (9) in a closed position of the shut-off valve (1), and an actuating slide (5) which is displaceably guided in the valve housing in the housing longitudinal direction and is drivingly connected to an actuating mechanism which converts a movement exerted on an actuating arm into a linear movement on the actuating slide (5), wherein the valve housing has at least two housing parts (2, 3) which can be connected to one another, wherein the through-flow opening (7) - which defines the valve seat (8) -, the valve closure (9) and the actuating slide (5) are provided in the first housing part (2), wherein the actuating mechanism is arranged with the actuating arm (15) in the second housing part (3), wherein the actuating mechanism and the actuating slide (5) are drivingly connected to one another in a magnetically coupled manner, wherein the actuating slide (5) is displaceably guided in a guide spigot (20) which protrudes over a partition wall (21), wherein the partition wall (21) which is held on the outer circumferential side on the housing inner circumference of the first housing part (2) and the guide spigot (20) which is connected thereto separates the region of the first housing part (2), which receives the valve closure (9), the valve seat (8) and the actuating slide (5), in a liquid-tight manner from the second housing part (3), wherein a magnet carrying frame (17) is displaceably guided on the guide spigot (20) and carries at least one permanent magnet (18), and wherein the magnet carrying frame (17) can be connected to a coupling piece (19) which is displaceably guided in the second housing part, **characterised in that** the actuating mechanism converts a pivoting movement exerted on the actuating arm (15) into a linear movement on the actuating slide (5) and the coupling piece (19) and the magnet carrying frame (17) latch together when the first and second housing parts (2, 3) are pushed together.

2. Shut-off valve as claimed in claim 1, **characterised in that** a first liquid channel (4) is provided which connects a first valve side, facing towards the through-flow opening (7), to a chamber (11) which is arranged on the second valve side facing away from the through-flow opening (7), **in that** the actuating slide (5) uncovers at least one outlet opening (12) in the valve closure (9) in a sliding position of the actuating slide (5) which is advanced in the direction facing away from the valve closure (9), which outlet opening (12) connects the chamber (11) to the valve outlet (6), and **in that** the partial region of the first valve side defined by the valve seat (8) in the closed position of the shut-off valve (1) is smaller in comparison to the second valve side facing towards the chamber (11).

3. Shut-off valve as claimed in claim 1 or 2, **characterised in that** the first and second housing parts (2, 3) can be inserted one inside the other and releasably connected to one another in their partial regions facing towards one another.

4. Shut-off valve as claimed in claim 3, **characterised in that** the first and second housing parts (2, 3) can be latched to one another.

5. Shut-off valve as claimed in any one of claims 1 to 4, **characterised in that** the actuating arm is designed as a pivoting arm (15) which is pivotably mounted in the second housing part and can be brought into driving connection with the actuating slide (5) in the first housing part (2) when the housing parts (2, 3) are being connected.

6. Shut-off valve as claimed in claim 5, **characterised in that** the actuating arm designed as a pivoting arm (15) can be preferably releasably connected at its first arm end (16) to a hand shower holder and is drivingly connected at its second arm end to the actuating slide (5).

7. Shut-off valve as claimed in any one of claims 1 to 6, **characterised in that** the at least one permanent magnet (18) which is held on the magnet carrying frame (17) cooperates with a ferromagnetic actuating slide (5).

8. Shut-off valve as claimed in any one of claims 1 to 7, **characterised in that** the at least one permanent magnet (18) which is held on the magnet carrying frame (17) is annular and **in that** the guide spigot (20) passes through the annular opening of the at least one permanent magnet (18).

9. Shut-off valve as claimed in claim 8, **characterised in that** the annular permanent magnet (18) can be inserted into the magnet carrying frame (17) as far as an insertion stop (26), and **in that** at least one latching cam (27) protrudes in the magnet carrying frame (17) and engages behind the permanent magnet (18) lying on the insert stop (26).

10. Shut-off valve as claimed in any one of claims 5 to 9, **characterised in that** a conversion mechanism or conversion gear is provided which converts a pivoting movement of the actuating arm designed as a pivoting arm (15) into a sliding movement of the coupling piece (19).

11. Shut-off valve as claimed in any one of claims 5 to 10, **characterised in that** at least one toothing arrangement (28) which is curved in the shape of a circular arc is provided on the pivoting arm (15) and meshes with an allocated counter-toothing arrangement (29) on the coupling piece (19).

12. Shut-off valve as claimed in any one of claims 5 to 11, **characterised in that** the pivoting arm (15) can be pivoted from the open position of the shut-off valve (4) to its closed position against a restoring force.

13. Shut-off valve as claimed in claim 12, **characterised in that** the restoring force is configured as at least one return spring.

14. Shut-off valve as claimed in claim 13, **characterised in that** the return spring is designed as a resilient return tongue (30) which acts upon the pivoting arm (15).

15. Shut-off valve as claimed in any one of claims 12 to 14, **characterised in** the restoring force can be adjusted.

16. Shut-off valve as claimed in claim 15, **characterised in that** the contact pressure of the return tongue (30) onto the pivot arm (15) can be varied or fixed by means of a set-screw (31).

17. Use of a shut-off valve as claimed in any one of claims 1 to 16, **characterised in that** the shut-off valve (1) is a liquid-guiding shut-off valve.

18. Use of a shut-off valve as claimed in any one of claims 1 to 16, **characterised in that** the shut-off valve can be inserted with its valve housing in a sanitary fitting designed as a hand shower holding device and at this location is connected upstream of a liquid outlet (6), leading to a hand shower, in the flow direction.

## Revendications

1. Soupape d'arrêt (1) avec un corps de soupape insérable dans une conduite de fluide, une ouverture de passage (7) prévue dans le corps de soupape, qui entoure un siège de soupape (8) qui dans une position de fermeture de la soupape d'arrêt (1) est fermé par une fermeture de soupape (9), et un coulisseau d'actionnement (5) guidé de façon coulissante en direction longitudinale du corps dans le corps de soupape, qui est en liaison d'entraînement avec un mécanisme d'actionnement, qui convertit un mouvement exercé au niveau d'un bras d'actionnement en un mouvement linéaire au niveau du coulisseau d'actionnement (5), dans laquelle le corps de soupape comporte au moins deux parties de corps (2, 3) pouvant être assemblées l'une à l'autre, dans laquelle l'ouverture de passage (7) entourant le siège de soupape (8), la fermeture de soupape (9) ainsi que le coulisseau d'actionnement (5) sont prévus dans la première partie de corps (2), dans laquelle le mécanisme d'actionnement avec le bras d'actionnement (15) est disposé dans la deuxième partie de corps (3), dans laquelle le mécanisme d'actionnement et le coulisseau d'actionnement (5) sont en liaison d'entraînement l'un avec l'autre par couplage magnétique, dans laquelle le coulisseau d'actionnement (5) est guidé de façon coulissante dans un tourillon de guidage (20), qui est saillant sur une paroi de séparation (21), dans laquelle la paroi de séparation (21) maintenue sur le côté périphérique extérieur sur la périphérie intérieure du corps de la première partie de corps (2) et le tourillon de guidage (20) assemblé à celle-là sépare la région de la première partie de corps (2) contenant la fermeture de soupape (9), le siège de soupape (8) et le coulisseau d'actionnement (5) de façon étanche au liquide de la deuxième partie de corps (3), dans laquelle un support d'aimant (17), qui porte au moins un aimant permanent (18), est guidé de façon coulissante sur le tourillon de guidage (20) et dans laquelle le support d'aimant (17) peut être assemblé à une pièce de couplage (19) qui est guidée de façon coulissante dans la deuxième partie de corps, **caractérisée en ce que** le mécanisme d'actionnement convertit un mouvement pivotant exercé au niveau du bras d'actionnement (15) en un mouvement linéaire au niveau du coulisseau d'actionnement (5) et la pièce de couplage (19) et le support d'aimant (17) se verrouillent l'un à l'autre lors de l'assemblage de la première et de la deuxième parties de corps (2, 3).

2. Soupape d'arrêt selon la revendication 1, **caractérisée en ce qu'**il est prévu un premier canal de liquide (4), qui relie un premier côté de soupape tourné vers l'ouverture de passage (7) à une chambre (11) disposée sur le deuxième côté de soupape détourné de l'ouverture de passage (7), **en ce que** le coulisseau d'actionnement (5) libère, dans une position de coulissement du coulisseau d'actionnement (5) avancée dans une direction détournée de la fermeture de soupape (9), au moins une ouverture de sortie (12) dans la fermeture de soupape (9), cette ouverture de sortie (12) reliant la chambre (11) à la sortie de soupape (6), et **en ce que** la région partielle du premier côté de soupape délimitée par le siège de soupape (8) en position de fermeture de la soupape d'arrêt (1) est plus petite par comparaison avec le deuxième côté de soupape tourné vers la chambre (11).

3. Soupape d'arrêt selon la revendication 1 ou 2, **caractérisée en ce que** la première et la deuxième parties de corps (2, 3) sont insérables l'une dans l'autre par leurs régions partielles tournées l'une vers l'autre et peuvent être assemblées l'une à l'autre de façon séparable.

4. Soupape d'arrêt selon la revendication 3, **caractérisée en ce que** la première et la deuxième parties de corps (2, 3) peuvent être verrouillées l'une à l'autre.

5. Soupape d'arrêt selon l'une quelconque des revendications 1 à 4, **caractérisée en ce que** le bras d'actionnement est réalisé sous la forme d'un bras pivotant (15) monté de façon pivotante dans la deuxième partie de corps, lequel peut être amené en liaison d'entraînement avec le coulisseau d'actionnement (5) dans la première partie de corps (2) lors de l'assemblage des parties de corps (2, 3).

6. Soupape d'arrêt selon la revendication 5, **caractérisée en ce que** le bras d'actionnement réalisé en forme de bras pivotant (15) peut être assemblé à sa première extrémité de bras (16) à un support de douche, de préférence de façon séparable et est en liaison d'entraînement par sa deuxième extrémité de bras avec le coulisseau d'actionnement (5).

7. Soupape d'arrêt selon l'une quelconque des revendications 1 à 6, **caractérisée en ce que** ledit au moins un aimant permanent (18) maintenu sur le support d'aimant (17) coopère avec un coulisseau d'entraînement ferromagnétique (5).

8. Soupape d'arrêt selon l'une quelconque des revendications 1 à 7, **caractérisée en ce que** ledit au moins un aimant permanent (18) maintenu sur le support d'aimant (17) est de forme annulaire et **en ce que** le tourillon de guidage (20) traverse l'ouverture annulaire dudit au moins un aimant permanent (18).

9. Soupape d'arrêt selon la revendication 8, **caractérisée en ce que** l'aimant permanent de forme annulaire (18) peut être inséré dans le support d'aimant (17) jusqu'à une butée d'insertion (26) et **en ce qu'**au moins une came d'encliquetage (27) est saillante dans le support d'aimant (17), laquelle s'accroche derrière l'aimant permanent (18) appliqué sur la butée d'insertion (26).

10. Soupape d'arrêt selon l'une quelconque des revendications 5 à 9, **caractérisée en ce qu'**il est prévu un mécanisme de conversion ou un engrenage de conversion, qui convertit un mouvement pivotant du bras d'actionnement réalisé sous forme de bras pivotant (15) en un mouvement coulissant de la pièce de couplage (19).

11. Soupape d'arrêt selon l'une quelconque des revendications 5 à 10, **caractérisée en ce qu'**il est prévu sur le bras pivotant (15) au moins une denture (28) incurvée en forme d'arc de cercle, qui engrène avec une denture opposée (29) qui lui est associée sur la pièce de couplage (19).

12. Soupape d'arrêt selon l'une quelconque des revendications 5 à 11, **caractérisée en ce que** le bras pivotant (15) peut pivoter de la position d'ouverture de la soupape d'arrêt (4) à la position de fermeture de celle-là contre une force de rappel.

13. Soupape d'arrêt selon la revendication 12, **caractérisée en ce que** la force de rappel est produite par au moins un ressort de rappel.

14. Soupape d'arrêt selon la revendication 13, **caractérisée en ce que** le ressort de rappel est formé par une lamelle de rappel (30) élastique et agissant sur le bras pivotant (15).

15. Soupape d'arrêt selon l'une quelconque des revendications 12 à 14, **caractérisée en ce que** la force de rappel est réglable.

16. Soupape d'arrêt selon la revendication 15, **caractérisée en ce que** la pression d'application de la lamelle de rappel (30) au niveau du bras pivotant (15) peut être modifiée et fixée au moyen d'une vis de réglage (31).

17. Utilisation d'une soupape d'arrêt selon l'une quelconque des revendications 1 à 16, **caractérisée en ce que** la soupape d'arrêt (1) est une soupape d'arrêt destinée au transport de liquide.

18. Utilisation d'une soupape d'arrêt selon l'une quelconque des revendications 1 à 16, **caractérisée en ce que** la soupape d'arrêt peut être insérée avec son corps de soupape dans une robinetterie sanitaire réalisée en forme de dispositif de support de douche et y est montée, dans la direction d'écoulement, avant une sortie de liquide (6) conduisant à une douche.
